(19) Europäisches Patentamt
European Patent Office
Office européen des brevets

(11) **EP 3 168 779 A1**

(12) **EUROPEAN PATENT APPLICATION**

(43) Date of publication:
**17.05.2017 Bulletin 2017/20**

(51) Int Cl.:
**G06K 9/00** (2006.01)

(21) Application number: **16194553.0**

(22) Date of filing: **19.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.10.2015  IT UB20154942**

(71) Applicant: **Magneti Marelli S.p.A.**
**20011 Corbetta (MI) (IT)**

(72) Inventors:
• **BOLLEA, Mr. Denis**
  **I-20011 Corbetta (Milano) (IT)**
• **PATANDER, Mr. Marco**
  **I-20011 Corbetta (Milano) (IT)**
• **ZANI, Mr. Paolo**
  **I-20011 Corbetta (Milano) (IT)**

(74) Representative: **Crovini, Giorgio**
**Buzzi, Notaro & Antonielli d'Oulx S.r.l.**
**Via Maria Vittoria, 18**
**10123 Torino (IT)**

(54) **METHOD FOR IDENTIFYING AN INCOMING VEHICLE AND CORRESPONDING SYSTEM**

(57)    Method for identifying an incoming vehicle (IV) on the basis of images (I) acquired by one or more video-cameras (C) mounted on a vehicle (V), comprising processing said images (I) in order to identify light spots corresponding to the vehicle lamps, including performing a multi-scale processing procedure (110) to extract bright spots areas (LBS) from the images (I) and maximum values (M1...Mn) of said bright spots areas (LBS). The method includes tracking (124) positive regions (IPR) corresponding to said bright spots (LBS) and independently tracking (131) the bright spots (BS) themselves,
the tracking of said positive regions (IPR) being preceded by a classification procedure (120) including generating (121) candidate regions (CR) to be classified, training (122) multiple classifiers, depending on a aspect ratio of the candidate region (CR).

Fig. 3

**Description**

Technical field

The present description relates to techniques for identifying an incoming vehicle on the basis of images acquired by one or more video-cameras mounted on a vehicle, comprising processing said images in order to identify light spots corresponding to the vehicle lamps.

Description of the prior art

Obstacle detection and identification is a widely studied problem in the automotive domain, since it is an enabling technology not only for Autonomous Ground Vehicles (AGV), but also for many Advanced Driver Assistance Systems (ADAS). Several approaches to vehicle identification have been studied, both using data from only one sensor or fusing multiple sources to enhance the detection reliability. The most commonly used devices are radars, lasers and cameras, and each one comes with its own set of advantages and disadvantages.

Adaptive beam techniques are known, which adjust the headlamp position if an obstacle, i.e. an incoming auto-vehicle, is detected. Such techniques require detection distances far beyond those provided by a LIDAR unit. While a RADAR might provide a sufficient detection range, it is usually not accurate enough to fully exploit the potential of new-generation LED lamps. On the other hand, cameras have the advantage of being low-cost and widespread, while still providing both the necessary detection range and accuracy; however, extracting useful information from their data requires a non-trivial amount of computational power and complex processing.

Several approaches exist in literature to the detection of vehicles lamps (head-lamps, tail-lamps or both) during night-time. Many of them start with the labeling of a binarized source image: depending on the intents the binarization is performed with an adaptive threshold to have more recall and robustness to illumination changes, or with a fixed one to have more computational speed, or with some compromise. Then local maxima are found in the image and are used as seeds for expansion.

The problem with such methods is that some big reflecting surfaces (such as a road sign) can pass through this stage and need to be removed later.

Object and summary

An object of one or more embodiments is to overcome the limitations inherent in the solutions achievable from the prior art.

According to one or more embodiments, that object is achieved thanks to a method of identification having the characteristics specified in claim 1. One or more embodiments may refer to a corresponding system of identification.

The claims form an integral part of the technical teaching provided herein in relation to the various embodiments.

According to the solution described herein, the method includes operating a classification operation using custom features to train multiple adaptive classifiers, each one with a different aspect ratio for the classified regions.

The solution described herein is also directed to a corresponding system

Brief description of the drawings

The embodiments will now be described purely by way of a non-limiting example with reference to the annexed drawings, in which:

- Figure 1 represents a scenario of application of the method here disclosed;
- Figure 2 show schematically an image acquired by the method here disclosed;
- Figure 3 represents a flow diagram of the method here disclosed;
- Figure 4 represents schematically a further image handled by the method here disclosed;
- Figure 5 represents schematically further images handled by the method here disclosed;
- Figure 6 represents a graphic pattern used by the method here disclosed;
- Figure 7 represent regions identified by the method here disclosed;
- Figure 8 represent a regions of operation of the method here disclosed.

Detailed description of embodiments

The ensuing description illustrates various specific details aimed at an in-depth understanding of the embodiments. The embodiments may be implemented without one or more of the specific details, or with other methods, components, materials, etc. In other cases, known structures, materials, or operations are not illustrated or described in detail so that various aspects of the embodiments will not be obscured.

Reference to "an embodiment" or "one embodiment" in the framework of the present description is meant to indicate that a particular configuration, structure, or characteristic described in relation to the embodiment is comprised in at least one embodiment. Likewise, phrases such as "in an embodiment" or "in one embodiment", that may be present in various points of the present description, do not necessarily refer to the one and the same embodiment. Furthermore, particular conformations, structures, or characteristics can be combined appropriately in one or more embodiments.

The references used herein are intended merely for convenience and hence do not define the sphere of protection or the scope of the embodiments.

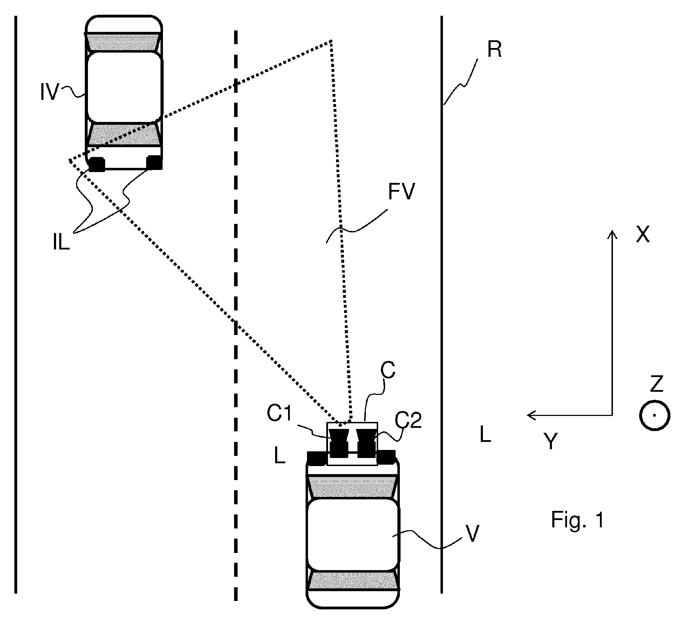

In Figure 1 it is shown a detection system, which includes a video-camera module C, which in the example there shown include two CMOS cameras C1, C2, mounted on the front of a vehicle V (ego-vehicle), looking forward. In Figure 1, X represents the longitudinal axis, corresponding to the longitudinal direction of a road R, i.e. it corresponds to the forward direction, while Y is the lateral direction, corresponding to the width of the road R, and Z is the height from a horizontal zero plane which corresponds to the ground, i.e. the paving of the road R.

Having a "good" image of vehicle lamps during night-time is very important to maximize the detection probability. The contrast of the bright lamps against the dark environment is often perceived with human eyes much better than with a camera, because of the higher dynamic range of the former, so an optimal setup configuration of the camera parameters needs to be searched.

The two cameras C1 and C2 have substantially the same field of view FV in the plane XY. The axis of the field of view FW is preferably not inclined with respect to X axis as shown in Figure 1, but is substantially parallel to the longitudinal axis X. In Figure 1 are shown two video-cameras C1, C2, which are identical, since these cameras are part of a stereo-camera system, however, preferably only one camera is used in the method here disclosed. Thus, in the following reference will be made only to a camera module C with field of vision FV. Both the cameras C1 and C2 provide High Dynamic Range (HDR) functionality. The HDR mode has been chosen since it produces a distinctive halo around the lamps and better separates them in the far range, and has been employed for acquiring image sequences for offline training and testing. With L are indicated the headlamps of the vehicle V.

A second incoming vehicle IV is shown in figure 1, with respective headlamps IL.

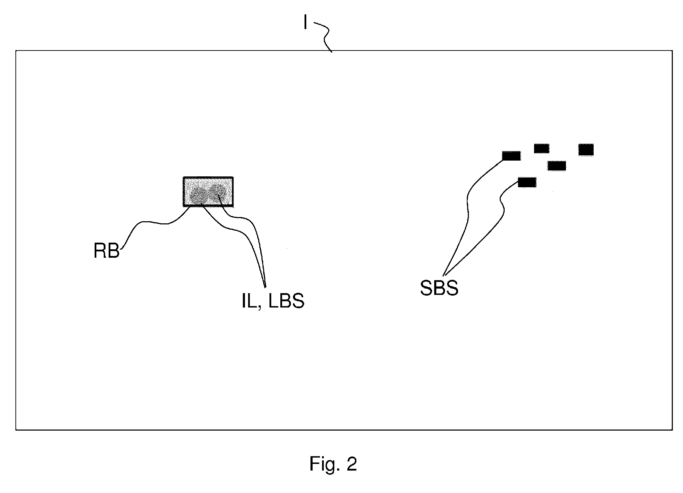

In Figure 2 it is shown schematically an image I captured by the camera module C, during a night-time vehicle detection operation. The proposed method is able to distinguish between lamp bright spots LBS originated by the lamps IL of the incoming vehicle IV, which are highlighted with bounding boxes RB and other spurious bright spots SBS that can be found in the image I.

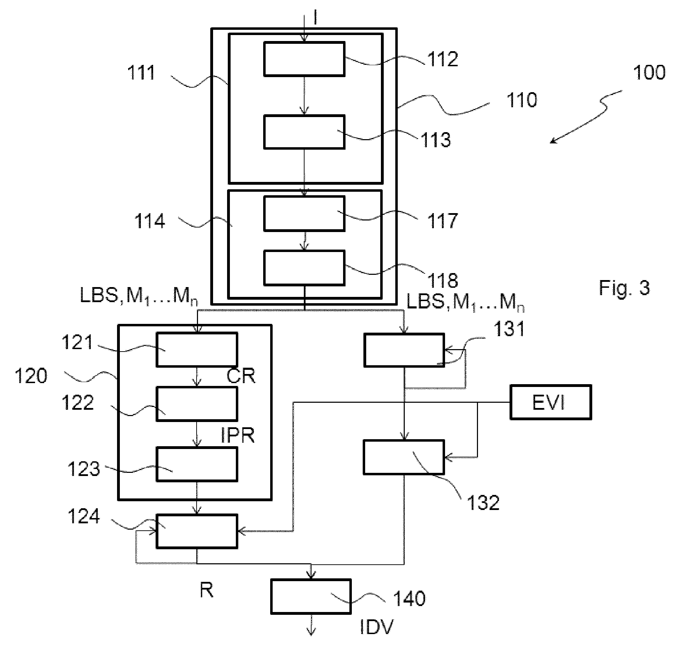

In Figure 3 a flow diagram of the method for identifying an incoming vehicle here described is shown, indicated as a whole with the reference number 100. such method takes as an input images I acquired by the camera module C mounted on the vehicle V and outputs an incoming detected vehicle information IDV, which is detected in the images I. The method 100 identifies incoming vehicles IV both from paired and unpaired lamps.

The method 100 comprises supplying an acquired image I in the first place to a multi-scale processing procedure 110, which basically includes a key-point extraction operation 111 followed by a bright spot extraction 114.

The key-point extraction operation 111 includes in the first place performing on the acquired image I an image pyramid generation step 112.

Such image pyramid generation step 112 includes building a scale space representation, in which the image I is smoothed and down-sampled, decreasing the resolution, at multiple steps, at subsequent scales on different octaves, i.e. a power of two change in resolution, by a technique which is known per se to the person skilled in the art: each octave is built from the preceding halving each linear dimension. In this way the down-sampling from an octave to the next one can be performed without interpolation with no critical precision loss. The scales, i.e. scale space representation, of the first octave are built from the full-size image I with bilinear interpolation, and the scale factors are chosen as consecutive powers of a base value (the $n^{th}$ root of 0.5, with n the number of scales per octave) to achieve uniformity. Thus at step 112 a plurality of differently scaled images is built, i.e. a pyramid of images with decreasing resolution by octaves.

Then a following step of interest (or key) point extraction 113 includes that it is computed in each scale the response of the image with a fixed-size Laplacian of Gaussian (LoG) approximation producing areas as bright spots LBS as blobs, while then maxima $M_1...M_n$ are extracted from such bright spots LBS. The interest point extraction step 113 produces thus a set $M_1...M_n$ of maxima and regions of the image marked as bright spots LBS.

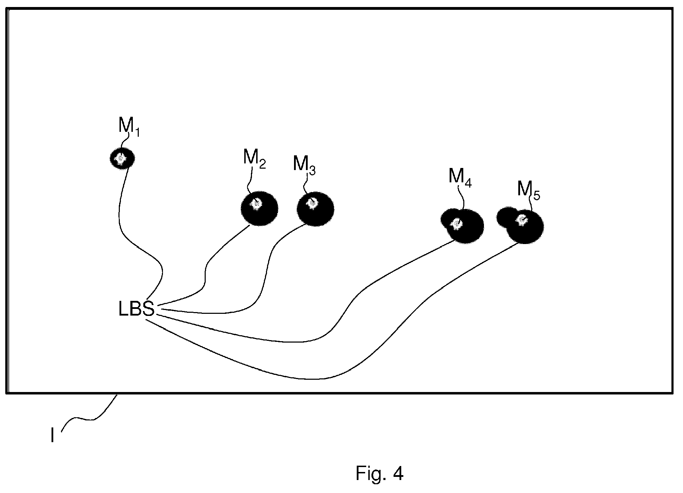

Such key point extraction operation 111 is very effective in finding even very small bright spots, as can be seen in Figure 4, where are shown the bright spots LBS, appearing as blobs, as detected and the corresponding maxima $M_1...M_n$. Each lamp bright spot LBS from operation 111 in principle corresponds to the area of an incoming lamp IL.

However, lamp bright spot LBS from operation 111 may need to be better defined. From the same Figure 4 it can be observed that sometimes an offset between the actual center of the lamp, i.e. the center of the lamp bright spot LBS and the point where the blob filter response is at a maximum, $M_1...M_n$, can occur; in order to correct it, in a bright spot extraction operation 114 is performed a floodfill labelization step 117 using each maximum point $M_1...M_n$ as a seed, and a centroid position of the blob found by the floodfill labelization is determined. The floodfill labelization step 117 includes also removing spurious maxima, such as those with a blob size greater than a threshold, or whose centroid correspond to a dark point.

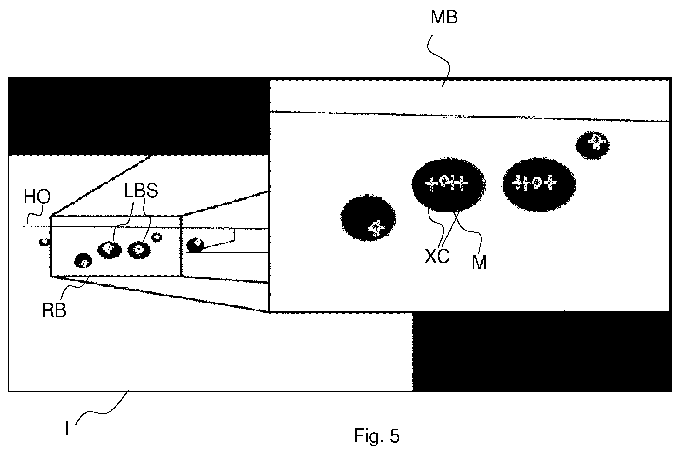

Subsequently a merging step 118 is performed, where neighboring maxima in the set of maxima $M_1...M_n$ are merged together to remove duplicates. The validated points from different scales are merged by proximity, as shown with reference to Figure 5 which represents an image I of the camera module C, with bright spot LBS in a bounding box RB, while with MB is indicated a zoom image of the bounding box RB, where each cross XC represent a maximum of the blob filter response of step 113 at a certain scale. Multiple crosses XC can identify the same lamp bright spot LBS. The merging step 118 groups the crosses XC for each bright spot LBS and identify a single point of maximum M for each bright spot LBS.

It must be noted that not every bright spot correspond to a vehicle lamp: there are also streetlights and reflecting objects, giving origin to spurious bright spot SBS, as indicated in Figure 2. A horizon line HO and a far lamps region FLR better described in the following are also visible in Figure 5.

After the multi-scale processing procedure 110, which produces as output a set of final bright spot LBS and a set of associated maxima $M_1...M_n$ starting from image I, as shown in Figure 2, such data pertaining final bright spot LBS and a set of associated maxima $M_1...M_n$ are fed to a region classification branch including a classification procedure 120 and in parallel to a branch performing further steps, i.e. a bright spot tracking steps 131 and an ad hoc validation step 132 on such final bright spot LBS and set of maxima $M_1...M_n$ which are additional or complementary to the classification procedure 120. Steps 131 and 132 are shown as consecutive, but in general may not be consecutive, in particular validation step 132 in an embodiment feeds data to the tracking step 131.

The classification procedure 120 includes in a step 121 that the points $M_1...M_n$ extracted in the previous processing procedure 110 are used as seeds to generate candidate regions CR to be classified.

Multiple classifiers are trained, depending on the aspect ratio of the candidate region CR, to correctly handle the high variability caused by different light shapes, intensities, vehicle distances and sizes without having to stretch the region contents. Thus, each maximum point $M_1...M_n$ becomes a source of a set of rectangular candidate regions CR at its best scale, i.e. the one where it has the highest response to the blob filter, with each aspect ratio being associated with a different classifier; multiple regions are generated for any given classifier/aspect ratio to increase robustness using a sliding window approach. To reduce the number of candidates the search area is limited according to a prior setting on the width of a lamp pair: only those candidates CR whose width is within a given range that depends on the image row of the candidate, i.e. the mean row of the rectangle, are used. Having the width of a lamp pair defined in world coordinates, such ranges depend on the full calibration of the camera C; to compute the ranges incoming vehicles IV are assumed to be fronto-parallel. Such vehicle orientation constraint could be removed setting the minimum range always to zero. Other three constraints are fixed: on a height $\tilde{Z}$ of the lamps IL from the horizontal zero-plane ($\tilde{Z}=0$), on the world size of the vehicle W between a minimum size $W_{min}$ and maximum size $W_{max}$ and on a maximum distance $D_{max}$ from the observer measured along the longitudinal axis X, $0 \le X \le D_{max}$. Under such conditions the re-projected width w of an incoming vehicle IV is maximum (minimum) when the incoming vehicle IV is centered in (at the boundary of) the image, the world width W is maximum (minimum) and the distance is minimal (maximal).

Furthermore the vehicle orientation constraint can be removed putting the search range lower bound always to zero. It is easy to find values for the parameters of the constraints because they are expressed in world coordinates. The problems:

min $w$, max $w$

$$s_{\min} \le w \le s_{\max}$$

$$W_{\min} \le W(w, \tilde{Z}) \le W_{\max}$$

$$0 \le X(w, \tilde{Z}) \le D_{\max}$$

are non-linear due to the projective relations between the unknowns (image space) and the constraint parameters (world space), but thanks to convexity a closed-form solution can be found. Furthermore the above mentioned assumptions simplify the computations, because the inequalities can be transformed into equalities. This leads to an efficient implementation that can be computed online using the camera parameters compensated with an ego-motion information EVI from the vehicle V odometry and inertial sensors. Ego-motion is defined as the 3D motion of a camera within an environment, thus the vehicle V odometry can supply information on the motion of the camera C which is fixed to the vehicle V.

A step 122 of classifications of the candidate regions CR then follows. In order to classify the obtained candidate regions CR, an AdaBoost (Adaptive Boosting) classifier has been chosen because of its robustness and real-time performance. Given the relatively low information content in the candidate regions CR, an ad-hoc feature set has been defined, including, preferably all the following parameters, although different, in particular reduced, sets are possible:

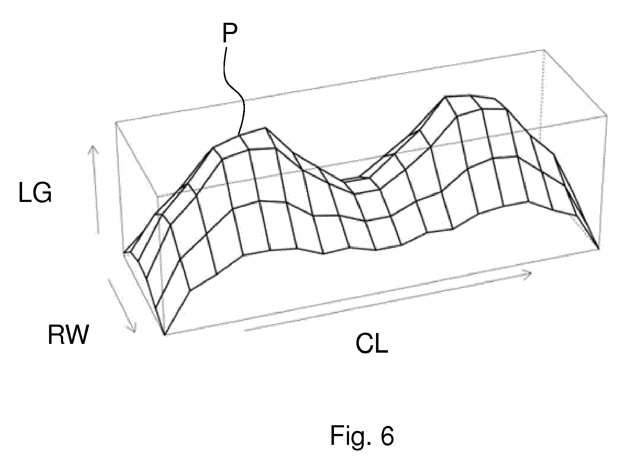

- luminance,
- size,
- shape,
- luminosity profile,
- intensity gradient,
- response of the LoG filter at step 113,
- number and position of local maxima Mi inside the candidate region CR, and
- the correlation with a fixed pattern P representing a lamp pair light intensity pattern, such as pattern P of Figure 6, which is represented along three axes indicating respectively the row RW of pixels, the column CL of pixels and the gray level LG for each pixel at a coordinate (RW, CL).

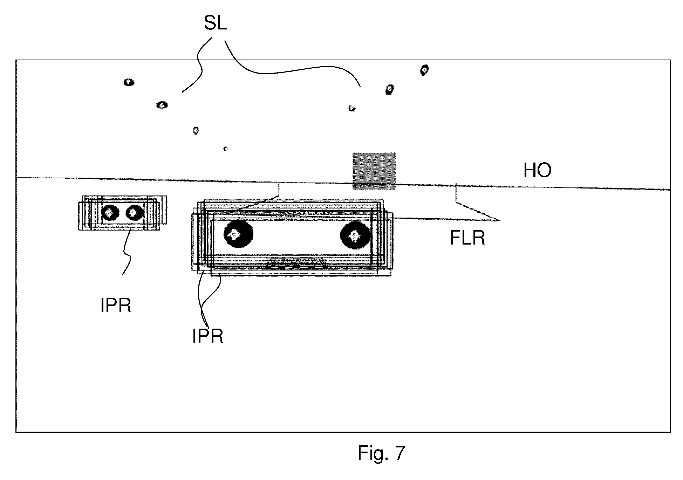

The regions classified as positives, which are visible in Figure 7, which represents positive-classified unmerged image regions IPR are then aggregated in a grouping step 123 based on their overlap to find a unique region for each target inside the scene. In Figure 7 it can be observed a set of bright spot SL above the horizon HO which correspond to the lights emitted by the street lamps at the side of the road R.

Thus, steps 123 produces unique positive regions IPR.

The method 100 does not immediately discard bright spots LBS corresponding to regions which are classified as negatives in step 122 (i.e. not positive regions IPR), rather uses them as input of a validation step 132 in the parallel branch also shown in Figure 3. This approach has two main benefits: it enhances the detection distance, because further away the lamp pairs tend to collapse into a single blob and the classifier 122 can wrongly mark it as negative, and it improves the performance in case of light sources such as a motorcycle, or cars with a failed light.

The regions classification step 120 is followed by a region tracking step 124, while the bright spots LBS at the output of the multi-scale processing 110, as mentioned are also parallel sent to a bright spot tracking step 131, since the positive regions IPR and the bright spots LBS, according to the proposed method, are tracked independently.

Positive regions IPR are tracked in step 124 using an Unscented Kalman Filter (UKF). The state of such UKF filter is the world position and longitudinal speed of the positive region IPR; it is assumed that the incoming vehicle IV has constant width and it travels at constant speed with fixed height from the zero plane Z=0. The observation of the UKF filter is the position of the center of the positive region IPR along with the region width.

Regions are associated together according to the euclidean distance from the centers of the estimations and of the observations.

An independent tracking directed to bright spot and not to regions is also performed. Bright spots LBS from multi-scale processing procedure 110 are tracked in a lamps tracking step 131 using a simple constant-speed prediction phase and an association based on the euclidean distance from the predicted and observed positions; this avoids the complexity associated to the configuration setup of a Kalman filter like in step 124. In this case a greedy association can lead to wrong matches, so the hungarian algorithm for the assignment, known per se, is preferably used to find the best assignment. To enhance the precision of the prediction phase the constant-speed hypothesis is made in world coordinates and re-projected on the image plane using the camera calibration.

The lamps tracking step 131 includes preliminarily an sub-step which attempts to assign a lamp or bright spot to a pair of lamps of a same vehicle.

The assignment of a lamp to a pair is done using the following policies. The aggregated classifier positives are treated as lamp pairs i.e. in each region it is looked for the pair of lamps that is most probable to be the lamps of the region according to their position. Furthermore each tracked lamp pair in the image I gets one vote for each bounding region RB classified as positive region IPR. Such votes are integrated over time. Every lamp pair whose vote goes over a threshold and it is a maximum for both the lamps is considered as a valid lamp pair. This allows to keep the pairing information even when the classifier misses the detection and has some degree of robustness to wrong classification results.

Whenever a single lamp is assigned to a pair the estimation of its position and speed is computed using the joint information from both the lamps to achieve more stability and accuracy. Besides, tracking the rectangular regions is more stable if done by tracking the enclosed lamps instead of the centroid of the rectangular region.

During the prediction phase the tracking step 131 takes into account the motion of the ego-vehicle V as determined from odometry and IMU sensors data EVI.

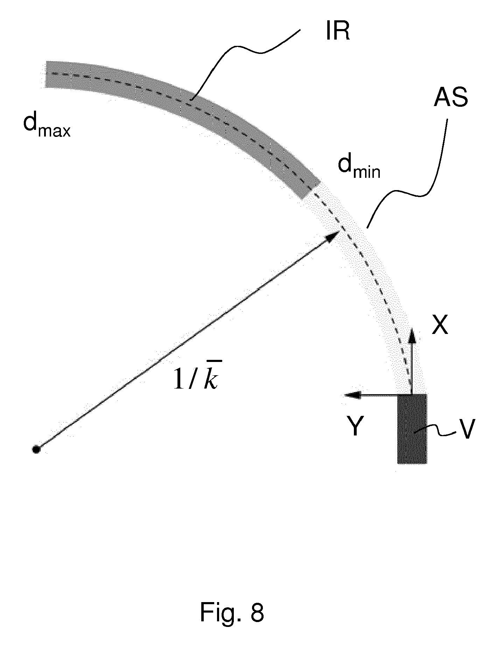

As indicated previously, when classification 120 fails, i.e. step 122 classifies candidate regions CR as negatives, the method 100 includes an ad-hoc validation step 132 in the parallel branch that still allows to detect a vehicle presence from the points extracted in the multi-scale processing phase 110. This ad-hoc validation step 132 includes that a region of interest IR, as displayed in Figure 8, corresponding to the most likely location of the road R ahead is computed according to the current speed and yaw rate of the ego-vehicle V, under the assumption that a road curvature $\bar{k}$ does not change abruptly; curvature $\bar{k}$ is computed as:

$$\bar{k} = \begin{cases} \frac{\dot{\phi}}{v} & \text{if } \dot{\phi} < v\,\bar{k}_{\max} \\ \bar{k}_{\max} & \text{otherwise} \end{cases} \qquad (1)$$

with v being the linear speed of the vehicle and $\dot{\phi}$ its yaw rate. $\bar{k}_{\max}$ indicates a saturation value which avoids peaks in the data, exploiting the highway-like scenario hypothesis. Bright spots LBS falling within the computed region IR are validated in the tracking step 124, or also 131, using data such as the blob size and statistics on their motion, age under the horizon line HO, age inside a positively-classified region. Thus ad-hoc validation step 132 adds further valid spots.

In figure 8 it is shown that under the constant curvature hypothesis the motion of the vehicle (blue in the picture) overlays an annular sector AS. The region of interest IR is generated considering the portion of such area between a minimum distance $d_{min}$ and a maximum distance $d_{max}$ from the current vehicle V position.

After the tracking step 131, 124 a 3D reprojection operation 140 is performed.

Although trying to obtain the 3D position from a 2D image spot is ill-posed in the general case, however the distance between two lamps in a pair can be used to accurately estimate the vehicle distance because the centers of the lamps remains approximately the same independently from their power, distance and intensity. Under these assumptions the 3D world positions of the two lamps $P_1$ and $P_2$ are given by the following equation:

$$\begin{aligned} P_1 &= k A_{2,x} A_1 + P_0 \\ P_2 &= k A_{1,x} A_2 + P_0 \end{aligned} \qquad (2)$$

where $A_1$, $A_2$ are the epipolar vectors computed from the two image points, i.e. their maxima, $P_0$ is the camera pinhole position and ratio k is:

$$k = \frac{W}{\|A_{2,x} A_1 - A_{1,x} A_2\|} \qquad (3)$$

with W being the world width between the two points. With the notation $A_{i,x}$ it is meant the x (longitudinal) component of the $A_i$ epipolar vector.

Re-projection, despite giving better results with both lamps of a pair, can be performed also with a single lamp, assuming fixed its height from the zero plane, by means of an inverse perspective mapping. This allows to have an estimate of the 3D position also for those spots that are inherently not part of a pair, for which the aforementioned method cannot be applied.

Thus, the advantages of the method and system for identifying an incoming vehicle at night-time just disclosed are clear.

The method and system supply a vehicles lamps detection system which, to maximize the detection performance high-dynamic range images have been exploited, with the use of a custom software filter when not directly available from the sensors.

The method in the classification phase follows a novel approach in which custom features are used to train multiple AdaBoost classifiers, each one with a different aspect ratio for the classified regions.

The method proposed, in order to improve output stability, includes performing the tracking of the positive regions using the position of the enclosed lamps, instead of the one of the region itself.

The method proposed advantageously uses motion information obtained from vehicle odometry and IMU data to provide not only a compensation for the camera parameters, but also a reinforcement to the classification algorithm performance with a prior for lamps validation.

Of course, without prejudice to the principle of the embodiments, the details of construction and the embodiments may vary widely with respect to what has been described and illustrated herein purely by way of example, without thereby departing from the scope of the present embodiments, as defined the ensuing claims.

## Claims

1. Method for identifying an incoming vehicle (IV) on the basis of images (I) acquired by one or more video-cameras (C) mounted on a vehicle (V), comprising processing said images (I) in order to identify light spots corresponding to the vehicle lamps, including performing a multi-scale processing procedure (110) to extract bright spots areas (LBS) from the images (I) and maximum values (M1...Mn) of said bright spots areas (LBS), **characterized in that** includes tracking (124) positive regions (IPR) corresponding to said bright spots (LBS) and independently tracking (131) the bright spots (LBS) themselves,

   the tracking of said positive regions (IPR) being preceded by a classification procedure (120) including generating (121) candidate regions (CR) to be classified,
   training (122) multiple classifiers, depending on a aspect ratio of the candidate region (CR).

2. The method according to claim 1, **characterized in that** said candidate regions generation step (121) includes that the maximum values ($M_1...M_n$) extracted in the multiprocessing phase (110) are used as seeds to generate said candidate regions (CR), each maximum value ($M_1...M_n$) becoming a source of a set of rectangular candidate regions (CR) at its best scale, in particular the one where it has the highest response to the blob filter, with each aspect ratio of the rectangular candidate region being then associated with a different classifier;

3. The method according to claim 1 or 2, **characterized in that** said generation step (121) includes that multiple regions are generated for any given classifier or aspect ratio using a sliding window approach.

4. The method according to claim 1, **characterized in that** said generation step (121) includes limiting a search area of the candidates (CR) according to a setting on the width of a lamp pair.

5. The method according to any of the preceding claims, **characterized in that** said classification step (120) further includes a grouping step (123) to find a unique region for each candidate (CR) based on their overlap inside the scene and it is followed by said region tracking step (124), tracking positive regions (IPR).

6. The method according to claim 1, **characterized in that** includes a lamp tracking step (131) following said multi-scale processing procedure (110) in which the tracking of the positive regions (IPR) is performed using the position of the region enclosed lamps, instead of the position of the region itself.

7. The method according to claim 1, **characterized in that** includes an ad-hoc validation step (132) to detect lamps not detected by the classification step (120) comprising defining a region of interest (IR) corresponding to the most likely location of the road (R) ahead, validating bright spots falling within said region of interest (IR) using the blob size and statistics on their motion, age under the horizon line, age inside a positively-classified region.

8. The method according to claim 1, **characterized in that** includes said step of independently tracking (131) the bright spots (LBS) from the multiprocessing phase (110), comprises preliminarily an attempt to assign a lamp or bright spot (LBS) pair of lamps of a same vehicle, said tracking including defining as lamp pairs positive regions (IPR) supplied by the classifier (120), and whenever each single lamp is assigned to a pair of lamps, computing the estimation of its position and speed using the joint information from both the lamps

9. The method according to claim 1, **characterized by** taking in account motion information (EVI) obtained from vehicle odometry and IMU data in said region tracking step (124) and lamp tracking step (131).

10. A system for identifying an incoming vehicle (IV) comprising one or more videocameras (C) mounted on a vehicle (V) to acquire images (I), comprising a processing module processing said images in order to identify light spots corresponding to the vehicle lamps, **characterized in that** said processing module is configured to perform the operations of any of claims 1 to 9.

Fig. 1

Fig. 2

I

111

112

110

113

100

114

117

118

LBS,M₁...Mₙ

LBS,M₁...Mₙ

Fig. 3

121

120

122

CR

IPR

123

124

R

131

EVI

132

140

IDV

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 16 19 4553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAOYA KOSAKA ET AL: "Vision-Based Nighttime Vehicle Detection Using CenSurE and SVM", IEEE TRANSACTIONS ON INTELLIGENT TRANSPORTATION SYSTEMS, vol. 16, no. 5, 25 September 2015 (2015-09-25), pages 2599-2608, XP055280050, Piscataway, NJ, USA ISSN: 1524-9050, DOI: 10.1109/TITS.2015.2413971 * the whole document * | 1-10 | INV. G06K9/00 |
| X | EP 2 523 174 A1 (DELPHI TECH INC [US]) 14 November 2012 (2012-11-14) * the whole document * | 1-10 | |
| X | WO 2010/006361 A1 (NAT ICT AUSTRALIA LTD [AU]; ROBERT KOSTIA [AU]) 21 January 2010 (2010-01-21) * the whole document * | 1-10 | |
| X | WO 2015/114654 A1 (KPIT TECHNOLOGIES LTD [IN]) 6 August 2015 (2015-08-06) * the whole document * | 1-10 | TECHNICAL FIELDS SEARCHED (IPC)<br>G06K |
| X | US 2011/255740 A1 (WU BING-FEI [TW] ET AL) 20 October 2011 (2011-10-20) * the whole document * | 1-10 | |
| X | WO 2008/088880 A1 (SIEMENS CORP RES INC [US]; VDO AUTOMOTIVE AG [DE]; ZHU YING [US]; BARA) 24 July 2008 (2008-07-24) * the whole document * | 1-10 | |
| X | US 2008/069400 A1 (ZHU YING [US] ET AL) 20 March 2008 (2008-03-20) * the whole document * | 1-10 | |

The present search report has been drawn up for all claims

| Place of search | Date of completion of the search | Examiner |
|---|---|---|
| The Hague | 4 April 2017 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 19 4553

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2017

| Patent document cited in search report | | | Publication date | Patent family member(s) | | | Publication date |
|---|---|---|---|---|---|---|---|
| EP 2523174 | A1 | | 14-11-2012 | CN | 102779430 | A | 14-11-2012 |
| | | | | EP | 2523174 | A1 | 14-11-2012 |
| | | | | US | 2012287276 | A1 | 15-11-2012 |
| WO 2010006361 | A1 | | 21-01-2010 | AU | 2009270324 | A1 | 21-01-2010 |
| | | | | EP | 2313863 | A1 | 27-04-2011 |
| | | | | US | 2011164789 | A1 | 07-07-2011 |
| | | | | WO | 2010006361 | A1 | 21-01-2010 |
| WO 2015114654 | A1 | | 06-08-2015 | CN | 105981042 | A | 28-09-2016 |
| | | | | EP | 3095073 | A1 | 23-11-2016 |
| | | | | JP | 2017505946 | A | 23-02-2017 |
| | | | | US | 2016335508 | A1 | 17-11-2016 |
| | | | | WO | 2015114654 | A1 | 06-08-2015 |
| US 2011255740 | A1 | | 20-10-2011 | TW | 201135680 | A | 16-10-2011 |
| | | | | US | 2011255740 | A1 | 20-10-2011 |
| WO 2008088880 | A1 | | 24-07-2008 | EP | 2121405 | A1 | 25-11-2009 |
| | | | | JP | 5124592 | B2 | 23-01-2013 |
| | | | | JP | 2010517139 | A | 20-05-2010 |
| | | | | US | 2008273752 | A1 | 06-11-2008 |
| | | | | WO | 2008088880 | A1 | 24-07-2008 |
| US 2008069400 | A1 | | 20-03-2008 | NONE | | | |

EPO FORM P0459

For more details about this annex : see Official Journal of the European Patent Office, No. 12/82